# EUROPÄISCHE PATENTSCHRIFT

(11) **EP 2 313 282 B1**
(45) Veröffentlichungstag und Bekanntmachung des Hinweises auf die Patenterteilung: **09.01.2013**
(21) Anmeldenummer: 09777131.5
(22) Anmeldetag: 11.07.2009
(51) Int. Cl.: B43K 19/02, B43K 19/16

(54) **SCHREIB-, ZEICHEN-, MAL- ODER KOSMETIKSTIFT**
WRITING, DRAWING, DECORATING OR COSMETIC PENCIL
CRAYON POUR ÉCRIRE, DESSINER, COLORIER OU DE MAQUILLAGE

(30) Priorität: 15.07.2008 DE 102008034015
(43) Veröffentlichungstag der Anmeldung: 27.04.2011
(73) Patentinhaber: J.S. Staedtler GmbH & Co. KG, 90427 Nürnberg (DE)
(72) Erfinder: THIES, Andreas, 91090 Effeltrich (DE); LINS, Nikolas, 90571 Schwaig Behringersdorf (DE); DELAPIERRE-KOHL, Christine, 91074 Herzogenaurach (DE); HERBOLSHEIMER, Johannes, 91619 Obernzenn (DE); JAKOB, Martin, 90768 Fürth (DE); LANG, Harald, 91484 Sugenheim (DE); ARTHEN, Simone, 90439 Nürnberg (DE)
(86) Internationale Anmeldenummer: PCT/EP2009/005052
(87) Internationale Veröffentlichungsnummer: WO 2010/006744

(56) Entgegenhaltungen:
- WO-A-01/43987
- DE-A1-102004 021 048
- DE-A1-102006 046 491
- DE-A1-102006 058 485

## Beschreibung

Die Erfindung betrifft einen Schreib-, Zeichen-, Mal- oder Kosmetikstift, umfassend eine farbabgebende polymergebundene Mine und einen polymergebundenen Holzersatzwerkstoff, wobei der Holzersatzwerkstoff die Mine der Länge nach zumindest teilweise bedeckt oder umgibt, und wobei zwischen der Mine und dem Holzersatzwerkstoff mindestens eine Haftvermittlerschicht angeordnet ist. Die Erfindung betrifft weiterhin ein Verfahren zur Herstellung eines derartigen Schreib-, Zeichen-, Mal- oder Kosmetikstift.

Stifte der eingangs genannten Art sind prinzipiell bekannt. Der Holzersatzwerkstoff ersetzt dabei das üblicherweise zur Halterung der farbabgebenden Mine vorgesehene, natürlich gewachsene Holz.

Holzgefasste Stifte, bei denen die Mine von natürlichem Holz umgeben bzw. ummantelt ist, sind seit langem bekannt. In den letzten Jahren steigt aufgrund der mangelnden Verfügbarkeit von Holz der Preis für qualitativ hochwertige Hölzer, was sich direkt auf die Herstellungskosten der Stifte auswirkt. Zudem werden zur Herstellung von Stiften vergleichsweise große natürliche Holzvorkommen verbraucht.

Es wird aus diesem Grund bereits seit Jahren versucht, die natürlichen Hölzer durch Holzersatzwerkstoffe zu ersetzen, die preisgünstiger sind und die natürlichen Holzvorkommen schonen.

So sind aus der DE 42 30 792 C2 bereits coextrudierte Stifte bekannt, welche eine polymergebundene Mine und anstelle von Holz zur Umhüllung der Mine einen Schaft aus Holzersatzwerkstoff in Form von geschäumtem Polymer aufweisen. Nachteilig ist es jedoch bei derartigen Stiften, dass ein solcher Holzersatzwerkstoff einen niedrigen E-Modul und somit eine hohe Elastizität aufweist, welche allerdings die Mine üblicherweise nicht aufweist. Dadurch kann es zum Bruch oder einer Schädigung der Mine im Stift kommen. Um dieses Problem zu umgehen, wird die Mine in der Regel ebenso elastisch eingestellt, was nun wiederum zu einer signifikanten Verschlechterung der Schreibeigenschaften der Mine führt.

Weiter ist es als nachteilig anzusehen, dass ein Stift mit einem Holzersatzwerkstoff aus geschäumtem Polymer für den Benutzer ein zu natürlich gewachsenem Holz unähnliches Spitzverhalten aufweist. Das gewohnte Spitzgeräusch und die dem natürlich gewachsenen Holz eigene Sprödigkeit fehlen.

Die DE102006046491 offenbart einen Schreib-, Zeichen-, Mal- oder Kosmetikstift, der eine farbabgebende polymergebundene Mine und einen polymergebundenen Holzersatzwerkstoff umfasst, wobei der Holzersatzwerkstoff die Mine der Länge nach zumindest teilweise umgibt, und der Stift weiterhin eine Traghülse umfasst, die den Holzersatzwerkstoff umgibt.

Weiter sind coextrudierte Stifte mit polymergebundenen Minen und polymergebundenem Holzersatzwerkstoff bekannt, wobei der Holzersatzwerkstoff anorganische Füllstoffe aufweist. Bei derartigen Stiften ist es als nachteilig anzusehen, dass deren Spitzbarkeit aufgrund der anorganischen Füllstoffe als ungenügend einzustufen ist.

**Aufgabe** der Erfindung ist es daher, einen Schreib-, Zeichen-, Mal- oder Kosmetikstift zu schaffen, der ein Spitzverhalten aufweist, das dem eines holzgefassten Stifts ähnelt und der zudem eine Mine mit ausgezeichneten Schreibeigenschaften aufweist, sowie ein Verfahren zur Herstellung eines derartigen Stifts bereitzustellen.

Die Aufgabe wird für den Schreib-, Zeichen-, Mal- oder Kosmetikstift, umfassend eine farbabgebende polymergebundene Mine und einen polymergebundenen Holzersatzwerkstoff, wobei der Holzersatzwerkstoff die Mine der Länge nach zumindest teilweise bedeckt oder umgibt, und wobei zwischen der Mine und dem Holzersatzwerkstoff mindestens eine Haftvermittlerschicht angeordnet ist, gelöst durch Bereitstellung eines Schreib-, Züchen-, Mal- oder Kosmetikstiftes wie er in Anspruch 1 definiert wird.

Es hat sich gezeigt, dass es zur Erreichung der gesetzten Aufgabe erforderlich ist, die Mine und den Holzersatzwerkstoff auf Basis unterschiedlicher Polymerbindungen auszubilden, damit einerseits die erforderlichen Schreibeigenschaften der Mine und andererseits die erforderliche Steifigkeit und Spitzbarkeit des Holzersatzwerkstoffs erreicht werden können. Weiterhin hat es sich gezeigt, dass hierzu in der Mine und im Holzersatzwerkstoff zueinander inkompatible Polymere erforderlich sind. Das bedeutet, dass der Minenwerkstoff und der Holzersatzwerkstoff keine oder eine nur unzureichend feste Verbindung miteinander eingehen. Dadurch ist die Mine im Gebrauch nicht ausreichend gestützt und bricht beim Schreiben häufig ab. Aus diesem Grund wird zwischen der Mine und dem Holzersatzwerkstoff mindestens eine Haftvermittlerschicht angeordnet wie in Anspruch 1 definiert. Es hat sich überraschend gezeigt, dass mindestens eine solche Haftvermittlerschicht, die einerseits an das mindestens eine Polymer in der Mine und andererseits an das mindestens eine weitere Polymer im Holzersatzwerkstoff ankoppelt, eine feste und permanente Verbindung zwischen der Mine und dem Holzersatzwerkstoff herstellt. Ein damit hergestellter Stift weist die erforderlichen Eigenschaften hinsichtlich Spitzbarkeit und Schreibeigenschaften der Mine auf und ähnelt einem holzgefassten Stift zum verwechseln.

Um die Spitzbarkeit von erfindungsgemäßen Stiften zu beurteilen, wurden diese angespitzt. Als mit geringem Kraftaufwand spitzbar gilt hierbei ein Stift, der bei der Prüfung bzw. Anspitzung ein so genanntes Spitzmoment von kleiner als 10 Ncm aufweist. Das Spitzmoment wird in einer zu diesem Zweck entwickelten Prüfmaschine bestimmt, indem ein Prüfkörper in Form eines Stifts 20 s lang kontinuierlich gespitzt wird. Das während der Anspitzung ermittelte durchschnittliche Drehmoment [in Ncm], das zum kontinuierlichen Anspitzen eines Stifts mit einem Durchmesser von 7,6 ± 0,2 mm mit einer Drehzahl von 43 U/min bei bereits vorhandenem Spitzkegel, d.h. bereits im gewünschten Winkel angespitzt, in einem handelsüblichen Spitzer mit neuer Klinge erforderlich ist, wird als Spitzmoment bezeichnet.

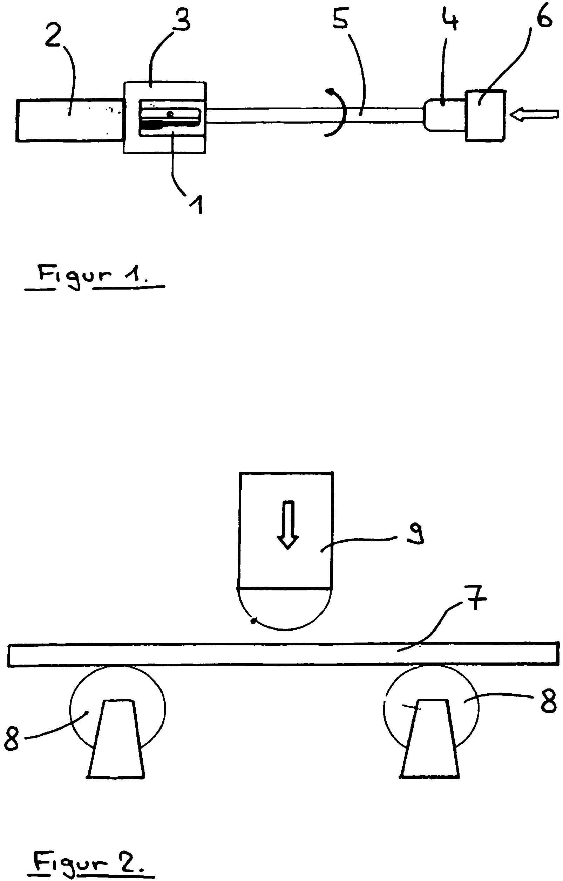

Das Prinzip einer Vorrichtung zur Messung des Spitzmoments ist in der Figur 1 zur Erläuterung dargestellt. Ein Spitzer 1 wird dazu in einer, mit einer Drehmoment-Messvorrichtung 2 verbundenen Halterung 3 befestigt. Ein Stift 5 wird in einer Aufnahme 4 rotierbar bereitgestellt und in den Spitzer 1 eingeführt. Es erfolgt ein pneumatischer Vorschub des rotierenden Stifts 5 in Richtung des Spitzers 1 mittels einer Vorschubeinrichtung 6, die auf die Aufnahme 4 des Stiftes 5 mit einer Vorschubkraft von 20 N einwirkt (siehe Pfeil rechts im Bild). Das während des Spitzvorgangs des Stifts 5 von der Drehmoment-Messvorrichtung 2 gemessene Drehmoment wird aufgezeichnet und über die Prüfdauer gemittelt, um das Spitzmoment zu bestimmen.

Die für den Gebrauch als Umhüllung für Minen von Stiften erwünschte Biegebruchfestigkeit des Holzersatzwerkstoffs liegt insbesondere bei mindestens 50 MPa. Der Elastizitätsmodul liegt vorzugsweise bei mindestens 5000 MPa. Die Bestimmung von Biegebruchfestigkeit und Elastizitätsmodul erfolgt im 3-Punkt-Biegeversuch in Anlehnung an DIN 52186 (Prüfung von Holz - Biegeversuch).

In **Figur 2** ist eine Messvorrichtung zur Durchführung eines derartigen 3-Punkt-Biegeversuchs dargestellt. Es werden zylindrische Prüfkörper 7 in Form von Stiften mit einem Durchmesser von 7,6 ± 0,2 mm und einer Länge von 180 ± 5 mm verwendet. Der Prüfkörper 7 wird auf beweglichen Rollen 8 mit einer Stützweite von 100 mm gelagert (Abstand der Mittelpunkte der Rollen 8). Die Krafteinleitung erfolgt mittig mit einem Prüfstempel 9. Rollen 8 und Prüfstempel 9 haben einen Radius von 15 mm. Während der Prüfung wird der Prüfkörper 7 gleichmäßig belastet, bis der Prüfkörper 7 bricht. Aus der erforderlichen Bruchkraft und der gemessenen Durchbiegung des Prüfkörpers 7 unter zunehmender Last werden die Biegebruchfestigkeit und der Elastizitätsmodul des Prüfkörpers 7 bestimmt.

Beispiele für Schreib-, Zeichen- oder Malstifte sind insbesondere Bleistifte oder Farbstifte. Beispiele für Kosmetikstifte sind insbesondere Kajalstifte oder Lipliner.

Vorteilhafte Ausgestaltungen des erfindungsgemäßen Stifts sind nachfolgend aufgeführt.

Es hat sich besonders bewährt, wenn das mindestens eine Polymer in der Mine aus Polystyrol oder SAN gebildet ist.

Weiterhin hat es sich bewährt, wenn das mindestens eine weitere Polymer im Holzersatzwerkstoff aus der Gruppe der Polyolefine gewählt ist.

Polyolefine im Holzersatzwerkstoff sind inkompatibel mit Polystyrol oder SAN in der Mine.

Die mindestens eine Haftvermittlerschicht ist aus einem Styrol-Butadien-Copolymer und/oder einem Styrol/Ethenbuten/Styrol-Block-Copolymerisat ausgebildet, um ein Polyolefin im Holzersatzwerkstoff an Polystyrol oder SAN in der Mine anzukoppeln.

Die Wirkungsweise des Haftvermittlers wird anhand nachfolgender Figuren näher erläutert.

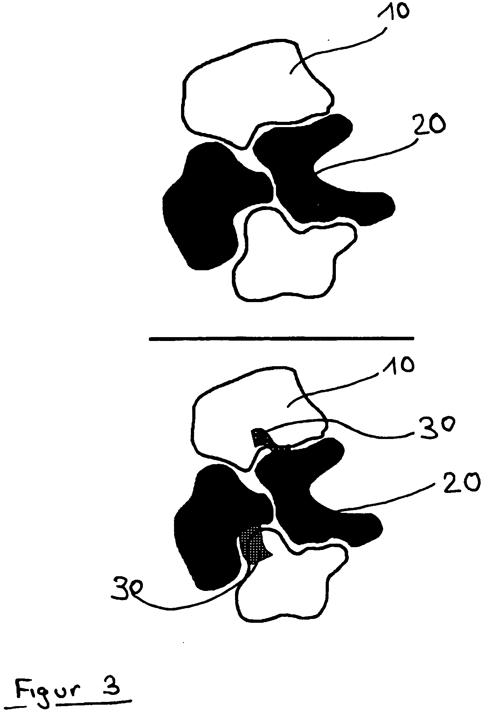

In **Figur 3** oben, sind inkompatible Polymere 10 und 20 dargestellt, die an ihren Grenzflächen ohne jede Verbindung miteinander vorliegen. In Figur 3 unten hingegen ist zu erkennen, dass unter Anwesenheit eines Haftvermittlers 30 eine Brückenbildung zwischen den Domänen der an sich inkompatiblen Polymere 10 und 20 ausgebildet werden. Durch den Haftvermittler werden die Polymere verträglich/kompatibel oder zumindest teilverträglich.

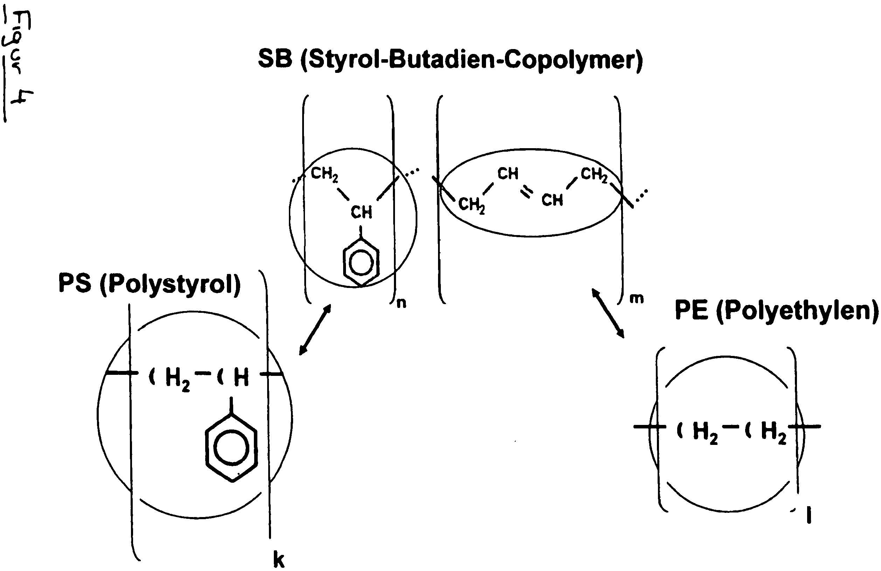

**Figur 4** zeigt beispielhaft an zwei Polymer und die zueinander inkompatibel sind. Es handelt sich um Polystyrol und Polyethylen. Diese Polymere bilden untereinander keine Verbindung oder Brücken auf. Erst durch die Anwesenheit eines Haftvermittlers in Form eines Styrol-Butadien-Copolymers erfolgt eine Anbindung der beiden.

Nachfolgend sind zwei Ausführungsbeispiele für coextrudierte Stifte dargestellt, bei welchen zwischen Mine und Holzersatzwerkstoff eine Haftvermittlerschicht eingebracht wird, um an sich unverträgliche oder inkompatible Polymergruppen miteinander zu verbinden. Zusätzlich können diese Stifte mit einer Dekorschicht versehen sein.

### Ausführungsbeispiel 1, Stift mit polymeren Schichtaufbau

| | |
|---|---|
| Mine | Polystyrol (PS) |
| Haftvermittter/Minenmantel | Styrol-Butadien-Copolymer (SB) |
| Holzersatz (WPC) | Polyolefin (PE-HD) |
| Dekor | TPE |

### Ausführungsbeispiel 2, Stift mit polymeren Schichtaufbau

| | |
|---|---|
| Mine | (SAN) |
| Haftvermittler/Minenmantel | Styrol-Butadien-Copolymer (SB) |
| Holzersatz (WPC) | Polyolefin (PE) |
| Dekor | Polypropylen (PP) |

Es hat sich insbesondere bewährt, wenn der mindestens eine polymergebundene Holzersatzwerkstoff aus

| | |
|---|---|
| 15 - 30 Gew.-% | mindestens eines Polyolefins, |
| 50 - 80 Gew.-% | mindestens eines organischen Füllstoffs, |
| 0 - 20 Gew.-% | mindestens eines anorganischen Füllstoffs, |
| 0,5 - 5 Gew.-% | mindestens eines Haftvermittlers, |
| 1 - 30 Gew.-% | mindestens eines Wachses, |
| 0 - 10 Gew.-% | mindestens eines Farbpigments, und |
| 0 - 10 Gew.-% | mindestens eines Additivs |

besteht.

Für die Spitzbarkeit vorteilhaft ist es, dass das mindestens eine Wachs im Holzersatzwerkstoff aus der Gruppe der Wachse umfassend Amidwachse, Fettsäuren wie z. B. Stearinsäure und Palmitinsäure, Montanwachse, Stearate, Fettsäureester, Paraffinwachse ausgewählt ist.

Für die Spitzbarkeit besonders vorteilhaft ist es, dass das mindestens eine Wachs im Holzersatzwerkstoff aus Amidwachs und/oder Stearinsäure gebildet ist.

Für die Spitzbarkeit erwies es sich am vorteilhaftesten, dass das mindestens eine Wachs im Holzersatzwerkstoff aus einer Kombination von Amidwachs und Stearinsäure gebildet ist, wobei ein Verhältnis von Amidwachs zu Stearinsäure im Bereich von 1:0,5 bis 1:2 liegt.

Damit der Holzersatzwerkstoff einen holzähnlichen Charakter erhält, ist es von Vorteil, wenn der mindestens eine organische Füllstoff aus Holz und/oder Cellulose gebildet ist. Für die Spitzbarkeit ist es insbesondere vorteilhaft, wenn der mindestens eine organische Füllstoff aus Füllstoffpartikeln mit einer maximalen Partikelgröße von 250 µm, insbesondere von maximal 100 µm, gebildet ist.

Für die Verbindung von Holz, das eine polare Oberfläche aufweist, und Polyolefinen, die eine unpolare Oberfläche aufweisen, ist ein Haftvermittler erforderlich. Da für Polyethylen (PE) und Polypropylen (PP) Haftvermittler auf dem Markt erhältlich sind, ist es vorteilhaft, dass das Polyolefin aus Polyethylen (PE) und/oder Polypropylen (PP) gebildet ist.

Zur Verbindung von Holz und PE hat sich ein Haftvermittler bewährt, der durch ein Polyethylen (PE) mit aufgepfropftem Maleinsäureanhydrid gebildet ist.

Für das Erreichen einer Biegebruchfestigkeit von größer als 50 MPa und eines Elastizitätsmoduls von größer als 5000 MPa ist es besonders vorteilhaft, wenn das mindestens eine Polyolefin aus Polyethylen High Density (PE-HD) gebildet ist.

Zum Aufhellen des Farbtons des Holzersatzwerkstoffs hat es sich bewährt, wenn der Holzersatzwerkstoff 1 bis 3 Gew.-% weißes Farbpigment enthält.

Für das Aufhellen des Farbtons erwies es sich als vorteilhaft, wenn das weiße Farbpigment aus Titandioxid (TiO₂) gebildet ist.

Für die Einstellung des gewünschten Farbtons ist es von Vorteil, wenn der Holzersatzwerkstoff 0,1 bis 5 Gew.-% buntes Farbpigment enthält.

Zum Einstellen der Sprödigkeit und der Gleiteigenschaften beim Spitzen ist es vorteilhaft, dass das mindestens eine anorganische Füllmittel im Holzersatzwerkstoff aus der Gruppe der Füllmittel umfassend Schichtsilikate, Kalziumsulfat, Kalziumcarbonat, Bornitrid, Speckstein, Graphit, gewählt ist.

Um spezielle Eigenschaften zu erreichen und besonderen Anforderungen zu genügen ist es vorteilhaft, dass das mindestens eine Additiv im Holzersatzwerkstoff aus der Gruppe der Additive umfassend Gleitmittel, Weichmacher, oberflächenaktive Substanzen, thermische Stabilisatoren, UV-Stabilisatoren, gewählt ist.

Nachfolgend sind zwei Beispielrezepturen für den Holzersatzwerkstoff angegeben, die sich für die Extrusion bewährt haben:

| **Beispielrezeptur Holzersatzwerkstoff 1** | |
|---|---|
| Polyethylen High Density (PE-HD) | 25,0 Gew.-% |
| Holzmehl | 65,0 Gew.-% |
| Polyethylen mit gepfropften Maleinsäureanhydrid | 2,0 Gew.-% |
| Amidwachs | 3,0 Gew.-% |
| Stearinsäure | 3,0 Gew.-% |
| Titandioxid | 2,0 Gew.-% |

| **Beispielrezeptur Holzersatzwerkstoff 2** | |
|---|---|
| Polypropylen (PP) | 20, 0 Gew. - % |
| Holzmehl | 70, 0 Gew. - % |
| Polypropylen mit gepfropften Maleinsäureanhydrid | 1,0 Gew. - % |
| Amidwachs | 3,0 Gew. - % |
| Stearinsäure | 1,0 Gew. - % |
| Bornitrid | 5,0 Gew. - % |

In Kombination mit dem oben beschriebenen Holzersatzwerkstoff hat sich eine polymergebundene Mine aus

| | |
|---|---|
| 10 bis 30 Gew.-% | Polystyrol oder Styrol-Acrylnitril (SAN) |
| 2 bis 25 Gew.-% | Wachs |
| 0,1 bis 5 Gew.-% | Palmöl |
| Rest | Füllstoff(en) |

bewährt.

Diese Minenzusammensetzung ist ausgezeichnet extrudierbar. Es hat sich in überraschender Weise herausgestellt, dass durch den gezielten Einsatz von Palmöl als Minenbestandteil, ein inneres Gleitmittel zur Rezeptur zugegeben ist, wodurch der Extrusionsdruck in einem Extruder signifikant herabgesetzt wird. Der Palmöl-Zusatz in der Minenzusammensetzung führt beim Extrudieren insbesondere zu einer deutlichen Reduzierung des Press- bzw. Extrusionsdrucks am Mundstück oder Kopf eines Extruders. Dabei sinkt der Druck mit steigender Zugabemenge an Palmöl, wobei eine Reduzierung des Drucks um mindestens 30%, insbesondere um mindestens 50%, gegenüber herkömmlichen extrudierbaren Minenzusammensetzungen erreicht wird.

Es hat sich gezeigt, dass andere natürliche oder synthetische Öle den Druck in einem Extruder zwar ebenfalls senken, dass diese aber die Festigkeit der extrudierten Mine überproportional beeinträchtigen. Überraschender Weise ist dies bei einem Einsatz von Palmöl nicht der Fall, da der Druck im Extruder niedrig und dennoch die Minenfestigkeit im erforderlichen Maß vorhanden ist.

Die typische Fettsäureverteilung von Palmöl setzt sich wie folgt zusammen (in Gew.-%):

| | |
|---|---|
| C12: Laurinsäure | 0 - 1 % |
| C14: Myristinsäure | 0 - 3 % |
| C16: Palmitinsäure | 36 - 47 % |
| C18: Stearinsäure | 2 - 8 % |
| C18: Ölsäure | 36 - 42 % |
| C18: Linolsäure | 7 - 12 % |
| C18: Linolensäure | 0 - 1 % |
| Sonstige: | max. 1 % |

Zudem bewirkt das Palmöl einen intensiveren Farbeindruck des Abstrichs der Mine und verbessert deren Gleitverhalten beim Schreiben. Bei Bleistiftminen zeigt sich ein satter Abstrich mit hohem Schwärzungsgrad, während Farbstiftminen einen satten, leuchtend intensiven Farbton des Abstrichs zeigen.

Der Palmöl-Anteil an der Minenzusammensetzung liegt im Bereich von 0,1 bis 5 Gew.-%, insbesondere im Bereich von 0,5 bis 2,5 Gew.-%. Geht der Gehalt an Palmöl über die vorstehende Grenze von 5 Gew.-% hinaus, so wird die Minenfestigkeit auch bei der Verwendung von Palmöl überproportional herabgesetzt. Die Minen neigen dann im Gebrauch zum Bröseln oder zum Brechen.

Die in der Mine verwendeten Wachse sind bei 20 °C knetbar, fest bis brüchig hart, weisen eine grobe bis feinkristalline Struktur auf, sind farblich durchscheinend bis opak, aber nicht glasartig und schmelzen über 40 °C ohne Zersetzung. Sie sind wenig oberhalb des Schmelzpunktes leicht flüssig und besitzen eine stark temperaturabhängige Konsistenz und Löslichkeit.

Bei den polymergebundenen Minen handelt es sich um ungebrannte Minen, die ohne eine weitere Wärmebehandlung oder Imprägnierung einsetzbar sind.

Insbesondere ist es bevorzugt, wenn die polymergebundene Mine

| | |
|---|---|
| 15 bis 25 Gew.-% | Polystyrol oder SAN |
| 4 bis 20 Gew.-% | Wachs |
| 0,5 bis 2,5 Gew.-% | Palmöl und |
| Rest | Füllstoff(e) |

aufweist.

Weiterhin hat es sich bewährt, wenn das mindestens eine Wachs in der Mine mindestens eines aus der Gruppe umfassend Stearate, Montanwachse, Amidwachse, Paraffine ist. Auch Mischungen aus zwei oder mehreren Wachsen sind in der Mine einsetzbar.

Besonders bevorzugt ist es dabei, wenn das mindestens eine Wachs in der Mine aus Kalziumstearat gebildet ist oder Kalziumstearat umfasst.

Vorteilhafter Weise ist der mindestens eine Füllstoff in der Mine aus mindestens einem Füllstoff der Gruppe umfassend Graphit, Ruß, hexagonales Bornitrid, Schichtsilikate, Kreide, Schwerspat, bunte Pigmente, unbunte Pigmente gebildet. Für Bleistiftminen ist dabei insbesondere Graphit oder Graphit in Kombination mit Ruß als farbgebende Füllstoffe bevorzugt. Für Farbstiftminen haben sich Kombinationen aus weißen oder farblosen Füllstoffen, wie hexagonalem Bornitrid, Schichtsilikaten, usw., mit farbgebenden Pigmenten, wie Azo-Pigmente, Phthalocyanine, Dioxazine, Chinacridone, Eisenoxide, Russ, Graphite, Ultramarin, Eisen-Cyankomplexe bewährt.

Eine bevorzugte Zusammensetzung für eine Bleistiftmine umfasst:

| | |
|---|---|
| 15 bis 25 Gew.-% | Polystyrol oder Styrol-Acrytnitril |
| 4 bis 12 Gew.-% | Wachs |
| 0,5 bis 2 Gew.-% | Palmöl und |
| Rest | Graphit oder Graphit und Ruß |

Insbesondere weist eine Bleistiftmine auf:

| | |
|---|---|
| 15 bis 25 Gew.-% | Polystyrol (PS) oder Styrol-Acrylnitril |
| 4 bis 12 Gew.-% | Kalziumstearat |
| 0,5 bis 2 Gew.-% | Palmöl und |
| Rest | Graphit oder Graphit und Ruß |

Eine beispielhaft genannte Rezeptur 1 für eine Bleistiftmine umfasst:

| | |
|---|---|
| Polystyrol (PS) | 21 Gew. % |
| Kaliciumstearat | 6 Gew. % |
| Palmöl | 1,0 Gew. % |
| Graphit | Rest |

Eine beispielhafte Rezeptur 2 für eine Bleistiftmine umfasst:

| | |
|---|---|
| Styrol-Acylnitril (SAN) | 15 Gew. % |
| Aluminiumstearat | 10 Gew. % |
| Palmöl | 2 Gew. % |
| Graphit | Rest |

Eine bevorzugte Zusammensetzung für eine Farbstiftmine umfasst:

| | |
|---|---|
| 15 bis 25 Gew.-% | Polystyrol oder SAN |
| 4 bis 12 Gew.-% | Wachs |
| 0,5 bis 2 Gew.-% | Palmöl und |
| Rest | Schichtsilikat(e) und/oder hexagonales Bornitrid sowie mindestens ein buntes Pigment und/oder ein unbuntes Pigment |

Insbesondere weist eine Farbstiftmine auf:

| | |
|---|---|
| 15 bis 25 Gew.-% | Polystyrol (PS) |
| 4 bis 12 Gew.-% | Montanwachse |
| 0,5 bis 2 Gew.-% | Palmöl und |
| Rest | Talkum und/oder hexagonales Bornitrid sowie mindestens ein buntes Pigment und/oder ein unbuntes Pigment |

Für den erfindungsgemäßen Schreib-, Zeichen-, Mal- oder Kosmetikstift hat es sich bewährt, wenn auf der, der Mine abgewandten Seite des Holzersatzwerkstoffs mindestens eine Dekorschicht angeordnet ist. Diese ersetzt die herkömmliche Lackschicht und ist insbesondere farbig ausgebildet und/oder mit einer Herstellertypischen Prägung versehen.

Dabei hat es sich bewährt, wenn die mindestens eine Dekorschicht eine polymergebundene Dekorschicht ist, die zu dem mindestens einen weiteren Polymer im Holzersatzwerkstoff kompatibel ist.

Alternativ ist es möglich, dass die mindestens eine Dekorschicht eine polymergebundene Dekorschicht ist, die zu dem mindestens einen weiteren Polymer im Holzersatzwerkstoff inkompatibel ist und dass zwischen dem Holzersatzwerkstoff und der mindestens einen Dekorschicht mindestens eine weitere Haftvermittlerschicht angeordnet ist, wobei die mindestens eine weitere Haftvermittlerschicht einerseits an das mindestens eine weitere Polymer im Holzersatzwerkstoff und andererseits an das Polymer in der mindestens einen Dekorschicht ankoppelt.

Die Aufgabe wird für das Verfahren zur Herstellung eines Schreib-, Zeichen-, Mal- oder Kosmetikstifts gelöst, indem die Mine, die mindestens eine Haftvermittlerschicht und der Holzersatzwerkstoff coextrudiert werden in einem Verfahren wie in Anspruch 9 definiert.

Die Aufgabe wird für das Verfahren zur Herstellung eines Schreib-, Zeichen-, Mal- oder Kosmetikstifts weiterhin gelöst, indem die Mine, die mindestens eine Haftvermittlerschicht, der Holzersatzwerkstoff, optional die mindestens eine weitere Haftvermittlerschicht, und die mindestens eine Dekorschicht coextrudiert werden in einem Verfahren wie in Anspruch 10 definiert.

Bei der Coextrusion des Stiftes werden die unterschiedlichen Komponenten (Mine, Haftvermittler, Holzersatzwerkstoff und Dekor) jeweils in einem Extruder aufgeschmolzen und die viskose Schmelze einem gemeinsamen Werkzeug zugeführt. In diesem Werkzeug werden die einzelnen Komponenten geometrisch vorgeformt, miteinander zusammengeführt und gemeinsam ausgestoßen. Nach Verlassen des Werkzeuges wird der so extrudierte Endlosstrang abgekühlt und erstarrt in der vorliegenden Geometrie. Der endlose Strang wird im Abschluss an die Kühlung getrennt, die Teilstücke weiteren Nachfolgeeinheiten zur Dekoration (Folienprägung) und Nachbearbeitung (Anspitzen) zugeführt.

Aufgrund des Herstellungsverfahrens und der hervorragenden Haftung die zwischen der Mine und des Holzersatzwerkstoffes ausgebildet wird, ist es möglich den Holzersatzwerkstoff in unterschiedlichsten Designs auszuführen. So kann der Holzersatzwerkstoff die Mine im Querschnitt gesehen, als geschlossener Ring umgeben, als Kreissegmente ausgebildet sein oder sich spiralförmig entlang der Mine erstrecken.

## Patentansprüche

1. Schreib-, Zeichen-, Mal- oder Kosmetikstift, umfassend eine farbabgebende polymergebundene Mine und einen polymergebundenen Holzersatzwerkstoff, wobei der Holzersatzwerkstoff die Mine der Länge nach zumindest teilweise bedeckt oder umgibt und mindestens einen organischen Füllstoff umfasst, und wobei zwischen der Mine und dem Holzersatzwerkstoff mindestens eine Haftvermittlerschicht angeordnet ist, wobei
die Mine und der Holzersatzwerkstoff jeweils mindestens ein Polymer aufweisen, wobei das mindestens eine Polymer in der Mine zu dem mindestens einen weiteren Polymer im Holzersatzwerkstoff inkompatibel ist derart, dass das mindestens eine Polymer der Mine und das mindestens eine weitere Polymer des Holzersatzwerkstoffs keine Verbindung miteinander eingehen,
und dass die mindestens eine Haftvermittlerschicht einerseits an das mindestens eine Polymer in der Mine und andererseits an das mindestens eine weitere Polymer im Holzersatzwerkstoff ankoppelt derart, dass die mindestens eine Haftvermittlerschicht einerweits mit dem mindestens einen Polymer der Mine und andererseits mit dem mindestens einen weiteren Polymer des Holzersatzwerkstoffs eine Verbindung eingeht, und wobei die mindestens eine Haftvermittlerschicht aus einem Styrol-Butadien-Copolymer und/oder einem Styrol/Ethenbuten/Styrol-Block-Copolymerisat ausgebildet ist.

2. Schreib-, Zeichen-, Mal- oder Kosmetikstift nach Anspruch 1,
**dadurch gekennzeichnet,**
**dass** das mindestens eine Polymer in der Mine aus Polystyrol oder SAN gebildet ist.

3. Schreib-, Zeichen-, Mal- oder Kosmetikstift nach Anspruch 1 oder 2,
**dadurch gekennzeichnet,**
**dass** das mindestens eine weitere Polymer im Holzersatzwerkstoff aus der Gruppe der Polyolefine gewählt ist.

4. Schreib-, Zeichen-, Mal- oder Kosmetikstift nach einem der Ansprüche 1 bis 3,
**dadurch gekennzeichnet,**
**dass** der mindestens eine polymergebundene Holzersatzwerkstoff aus 15 - 30 Gew.-% mindestens eines Polyolefins,
50 - 80 Gew.-% des mindestens einen organischen Füllstoffs,
0 - 20 Gew.-% mindestens eines anorganischen Füllstoffs,
0,5 - 5 Gew.-% mindestens eines Haftvermittlers,
1 - 30 Gew.-% mindestens eines Wachses,
0 - 10 Gew.-% mindestens eines Farbpigments, und
0 - 10 Gew.-% mindestens eines Additivs
besteht.

5. Schreib-, Zeichen-, Mal- oder Kosmetikstift nach einem der Ansprüche 1 bis 4,
**dadurch gekennzeichnet,**
**dass** die polymergebundene Mine aus
10 bis 30 Gew.-% Polystyrol oder Styrol-Acrylnitril
2 bis 25 Gew.-% Wachs
0,1 bis 5 Gew.-% Palmöl
Rest Füllstoff(en)
besteht.

6. Schreib-, Zeichen-, Mal- oder Kosmetikstift nach einem der Ansprüche 1 bis 5,
**dadurch gekennzeichnet,**
**dass** auf der, der Mine abgewandten Seite des Holzersatzwerkstoffs mindestens eine Dekorschicht angeordnet ist.

7. Schreib-, Zeichen-, Mal- oder Kosmetikstift nach Anspruch 6,
**dadurch gekennzeichnet,**
**dass** die mindestens eine Dekorschicht eine polymergebundene Dekorschicht ist, die zu dem mindestens einen weiteren Polymer im Holzersatzwerkstoff kompatibel ist derart, dass die mindestens eine Dekorschicht eine Verbindung mit dem mindestens einen weiteren Polymer des Holzersatzwerkstoffs eingeht.

8. Schreib-, Zeichen-, Mal- oder Kosmetikstift nach Anspruch 6,
**dadurch gekennzeichnet,**
**dass** die mindestens eine Dekorschicht eine polymergebundene Dekorschicht ist, die zu dem mindestens einen weiteren Polymer im Holzersatzwerkstoff inkompatibel ist derart, dass die mindestens eine Dekorschicht und das
mindestens eine weitere Polymer des Holzersatzwerkstoffs keine Verbindung miteinander eingehen,
und **dass** zwischen dem Holzersatzwerkstoff und der mindestens einen Dekorschicht mindestens eine weitere Haftvermittlerschicht angeordnet ist, wobei die mindestens eine weitere Haftvermittlerschicht einerseits an das mindestens eine weitere Polymer im Holzersatzwerkstoff und andererseits an das Polymer in der mindestens einen Dekorschicht ankoppelt derart, dass die mindestens eine weitere Haftvermittlerschicht einerseits mit der mindestens einen Dekorschicht und andererseits mit dem mindestens einen weiteren Polymer des Holzersatzwerkstoffs eine Verbindung eingeht.

9. Verfahren zur Herstellung eines Schreib-, Zeichen-, Mal- oder Kosmetikstifts nach einem der Ansprüche 1 bis 6,
**dadurch gekennzeichnet,**
**dass** die Mine, die mindestens eine Haftvermittlerschicht und der Holzersatzwerkstoff coextrudiert werden.

10. Verfahren zur Herstellung eines Schreib-, Zeichen-, Mal- oder Kosmetikstifts nach einem der Ansprüche 6 bis 8,
**dadurch gekennzeichnet,**
**dass** die Mine, die mindestens eine Haftvermittlerschicht, der Holzersatzwerkstoff, optional die mindestens eine weitere Haftvermittlerschicht, und die mindestens eine Dekorschicht coextrudiert werden.

## Claims

1. Writing, drawing, colouring or cosmetic pencil, comprising a colour-dispensing polymer-bound core and a polymer-bound wood substitute material, wherein the wood substitute material covers or surrounds the core at least partly over its length and comprises at least one organic filler, and wherein at least one adhesion-promoting layer is arranged between the core and the wood substitute material, wherein the core and the wood substitute material each comprise at least one polymer, wherein the at least one polymer in the core is incompatible with the at least one further polymer in the wood substitute material in such a manner that the at least one polymer of the core and the at least one further polymer of the wood substitute material do not enter into connection with one another, and that the at least one adhesion-promoting layer is coupled on the one hand with the at least one polymer in the core and on the other hand with the at least one further polymer in the wood substitute material in such a manner that the at least one adhesion-promoting layer enters into connection on the one hand with the at least one polymer of the core and on the other hand with the at least one further polymer of the wood substitute material and wherein the at least one adhesion-promoting layer is formed from a styrol-butadiene copolymer and/or a styrol/ethylenebutene/styrol-block copolymerisate.

2. Writing, drawing, colouring or cosmetic pencil according to claim 1, **characterised in that** the at least one polymer in the core is formed from polystyrol or SAN.

3. Writing, drawing, colouring or cosmetic pencil according to claim 1 or 2, **characterised in that** the at least one further polymer in the wood substitute material is selected from the group of polyolefins.

4. Writing, drawing, colouring or cosmetic pencil according to any one of claims 1 to 3, **characterised in that** the at least one polymer-bound wood substitute material consists of
| | |
|---|---|
| 15 - 30 weight % | of at least one polyolefin, |
| 50 - 80 weight % | of the at least one organic filler, |
| 0 - 20 weight % | of at least one inorganic filler, |
| 0.5 - 5 weight % | of at least one adhesion promotor, |
| 1 - 30 weight % | of at least one wax, |
| 0 - 10 weight % | of at least one colouring pigment and |
| 0 - 10 weight % | of at least one additive. |

5. Writing, drawing, colouring or cosmetic pencil according to any one of claims 1 to 4, **characterised in that** the polymer-bound core consists of
| | |
|---|---|
| 10 to 30 weight % | polystyrol or styrol acrylnitride |
| 2 to 25 weight % | wax |
| 0.1 to 5 weight % | palmitic oil |
| balance | filler(s). |

6. Writing, drawing, colouring or cosmetic pencil according to any one of claims 1 to 5, **characterised in that** at least one decorative layer is arranged on the side of the wood substitute material remote from the core.

7. Writing, drawing, colouring or cosmetic pencil according to claim 6, **characterised in that** the at least one decorative layer is a polymer-bound decorative layer, which is compatible with the at least one further polymer in the wood substitute material in such a manner that the at least one decorative layer enters into a connection with the at least one further polymer of the wood substitute material.

8. Writing, drawing, colouring or cosmetic pencil according to claim 6, **characterised in that** the at least one decorative layer is a polymer-bound decorative layer which is incompatible with the at least one further polymer in the wood substitute material in such a manner that the at least one decorative layer and the at least one further polymer of the wood substitute material do not enter into a connection with one another and that at least one further adhesion-promoting layer is arranged between the wood substitute material and the at least one decorative layer, wherein the at least one further adhesion-promoting layer is coupled on the one hand with the at least one further polymer in the wood substitute material and on the other hand with the polymer in the at least one decorative layer in such a manner that the at least one further adhesion-promoting layer enters into a connection on the one hand with the at least one decorative layer and on the other hand with the at least one further polymer of the wood substitute material.

9. Method of producing a writing, drawing, colouring or cosmetic pencil according to any one of claims 1 to 6, **characterised in that** the core, the at least one adhesion-promoting layer and the wood substitute material are coextruded.

10. Method of producing a writing, drawing, colouring or cosmetic pencil according to any one of claims 6 to 8, **characterised in that** the core, the at least one adhesion-promoting layer, the wood substitute material, optionally the at least one further adhesion-promoting layer, and the at least one decorative layer are coextruded.

## Revendications

1. Pointe d'écriture, de dessin, de coloriage ou de maquillage comprenant une mine d'application de couleur, à liaison polymère, et un matériau substitutif du bois, à liaison polymère,
ledit matériau substitutif du bois recouvrant ou entourant au moins partiellement ladite mine dans le sens de la longueur, et renfermant au moins une substance organique de charge, et
au moins une couche d'agent d'adhérence étant interposée entre ladite mine et ledit matériau substitutif du bois, sachant que
ladite mine et ledit matériau substitutif du bois sont respectivement pourvus d'au moins un polymère, le polymère, à présence minimale dans ladite mine, étant incompatible avec le polymère autre, à présence minimale dans ledit matériau substitutif du bois, de façon telle que ledit polymère à présence minimale dans ladite mine, et ledit polymère autre, à présence minimale dans ledit matériau substitutif du bois, ne se lient pas l'un à l'autre ; que la couche d'agent d'adhérence, à présence minimale, se rattache d'une part audit polymère à présence minimale dans ladite mine et, d'autre part, audit polymère autre à présence minimale dans ledit matériau substitutif du bois, de telle sorte que ladite couche d'agent d'adhérence à présence minimale se lie, d'une part, audit polymère à présence minimale dans ladite mine et, d'autre part, audit polymère autre à présence minimale dans ledit matériau substitutif du bois ; et
que ladite couche d'agent d'adhérence, à présence minimale, est constituée d'un copolymère styrène-butadiène et/ou d'un copolymère à blocs styrène/éthènebutène/styrène.

2. Pointe d'écriture, de dessin, de coloriage ou de maquillage selon la revendication 1,
**caractérisée par le fait**
**que** le polymère, à présence minimale dans la mine, est constitué de polystyrène ou de SAN.

3. Pointe d'écriture, de dessin, de coloriage ou de maquillage selon la revendication 1 ou 2,
**caractérisée par le fait**
**que** le polymère autre, à présence minimale dans le matériau substitutif du bois, est sélectionné au sein du groupe des polyoléfines.

4. Pointe d'écriture, de dessin, de coloriage ou de maquillage selon l'une des revendications 1 à 3,
**caractérisée par le fait**
**que** le matériau substitutif du bois, à présence minimale et à liaison polymère, est composé de
15-30 % en poids d'au moins une polyoléfine,
50-80 % en poids de la substance organique de charge à présence minimale,
0-20 % en poids d'au moins une substance minérale de charge,
0,5-5 % en poids d'au moins un agent d'adhérence,
1-30 % en poids d'au moins une cire,
0-10 % en poids d'au moins un pigment coloré, et
0-10 % en poids d'au moins un additif.

5. Pointe d'écriture, de dessin, de coloriage ou de maquillage selon l'une des revendications 1 à 4,
**caractérisée par le fait**
**que** la mine à liaison polymère est composée de
10 à 30 % en poids de polystyrène ou de styrène-acrylonitrile,
2 à 25 % en poids de cire,
0,1 à 5 % en poids d'huile de palme,
la part restante consistant en une ou des substance(s) de charge.

6. Pointe d'écriture, de dessin, de coloriage ou de maquillage selon l'une des revendications 1 à 5,
**caractérisée par le fait**
**qu'**au moins une couche décorative se trouve sur la face du matériau substitutif du bois qui est tournée à l'opposé de la mine.

7. Pointe d'écriture, de dessin, de coloriage ou de maquillage selon la revendication 6,
**caractérisée par le fait**
**que** la couche décorative à présence minimale est une couche décorative à liaison polymère compatible avec le polymère autre, à présence minimale dans le matériau substitutif du bois, de telle sorte que ladite couche décorative à présence minimale se lie audit polymère autre à présence minimale dans ledit matériau substitutif du bois.

8. Pointe d'écriture, de dessin, de coloriage ou de maquillage selon la revendication 6,
**caractérisée par le fait**
**que** la couche décorative à présence minimale est une couche décorative à liaison polymère incompatible avec le polymère autre, à présence minimale dans le matériau substitutif du bois, de telle sorte que ladite couche décorative à présence minimale et ledit polymère autre, à présence minimale dans ledit matériau substitutif du bois, ne se lient pas l'un à l' autre ;
et **qu'**au moins une couche additionnelle d'agent d'adhérence est interposée entre ledit matériau substitutif du bois et ladite couche décorative à présence minimale, ladite couche additionnelle d'agent d'adhérence à présence minimale se rattachant, d'une part, audit polymère autre à présence minimale dans le matériau substitutif du bois et, d'autre part, au polymère situé dans ladite couche décorative à présence minimale, de façon telle que ladite couche additionnelle d'agent d'adhérence, à présence minimale, se lie d'une part à ladite couche décorative à présence minimale et, d'autre part, audit polymère autre à présence minimale dans ledit matériau substitutif du bois.

9. Procédé de fabrication d'une pointe d'écriture, de dessin, de coloriage ou de maquillage conforme à l'une des revendications 1 à 6,
**caractérisé par le fait**
**que** la mine, la couche d'agent d'adhérence à présence minimale, et le matériau substitutif du bois, sont coextrudés.

10. Procédé de fabrication d'une pointe d'écriture, de dessin, de coloriage ou de maquillage conforme à l'une des revendications 6 à 8,
**caractérisé par le fait**
**que** la mine, la couche d'agent d'adhérence à présence minimale, le matériau substitutif du bois, facultativement la couche additionnelle d'agent d'adhérence à présence minimale, et la couche décorative à présence minimale, sont coextrudés.
